# EUROPÄISCHE PATENTSCHRIFT

(11) **EP 1 042 113 B1**
(45) Veröffentlichungstag und Bekanntmachung des Hinweises auf die Patenterteilung: **10.04.2002**
(21) Anmeldenummer: 98966775.3
(22) Anmeldetag: 14.12.1998
(51) Int. Cl.: B29C 49/64, B29C 49/42, B29C 49/68

(54) **VORRICHTUNG ZUR TEMPERIERUNG VON VORFORMLINGEN SOWIE VERFAHREN ZUR TEMPERIERUNG**
DEVICE FOR TEMPERING PREFORMS AND TEMPERING METHOD
DISPOSITIF POUR L'ETUVAGE DE PREFORMES, ET PROCEDE D'ETUVAGE

(30) Priorität: 24.12.1997 DE 19757818
(43) Veröffentlichungstag der Anmeldung: 11.10.2000
(73) Patentinhaber: SIG Corpoplast GmbH & Co. KG, 22145 Hamburg (DE)
(72) Erfinder: VOGEL, Klaus, D-22885 Barsbüttel (DE); MÜLLER, Hartwig, D-22952 Lütjensee (DE); CHOINSKI, Julian, D-22089 Hamburg (DE); KLAGES, Andreas, D-22149 Hamburg (DE); MORITZ, Marco, D-22047 Hamburg (DE)
(74) Vertreter: Klickow, Hans-Henning
(86) Internationale Anmeldenummer: DE9803694
(87) Internationale Veröffentlichungsnummer: WO9933635

(56) Entgegenhaltungen:
- EP-A- 0 620 099
- DE-A- 19 608 570
- US-A- 4 929 450

## Beschreibung

Die Erfindung betrifft ein Verfahren zur Temperierung von Vorformlingen aus einem thermoplastischen Material, wobei die Vorformlinge zur Blasverformung in Behälter vorgesehen sind, bei dem der Vorformling entlang eines Umfanges mit einem Temperaturprofil versehen wird, das dadurch erzeugt wird, daß sich in Richtung einer Längsachse des Vorformlings erstreckende streifenförmige Bereiche unterschiedlich beheizt werden und bei dem eine schrittweise Temperierung zur zeitlich aufeinander folgenden thermischen Konditionierung unterschiedlicher Bereiche des Vorformlings durchgeführt wird sowie bei dem eine schrittweise Rotation mit Bewegungs- und Ruhephase durchgeführt wird.

Die Erfindung betrifft darüber hinaus eine Vorrichtung zur Temperierung von Vorformlingen aus einem thermoplastischen Material, die mindestens eine Förderstrecke für die Vorformlinge und mindestens eine Heizeinrichtung aufweist und die Vorformlinge mit einem Temperaturprofil in Umfangsrichtung der Vorformlinge versieht sowie bei der zur Durchführung einer Rotationsbewegung des Vorformlings mindestens ein Rotationsantrieb vorgesehen ist, der eine schrittartige Drehbewegung des Vorformlings erzeugt

Ein derartiges Verfahren wird beispielsweise angewendet, wenn Behälter hergestellt werden sollen, deren Querschnitt von einer kreisrunden Form abweicht. Die Abweichung kann beispielsweise darin bestehen, Behälter mit ovalem Querschnitt oder beispielsweise mit dreieckigem oder viereckigem Querschnitt zu produzieren.

Die Herstellung derartiger unrunder Behälter wird bereits in der US 3,775,524 beschrieben. Es erfolgt zunächst eine symmetrische Temperierung der Vorformlinge, anschließend wird die Temperatur in ausgewählten Bereichen selektiv erhöht. Weitere Varianten zur Herstellung von Temperaturprofilierungen in Umfangsrichtung des Vorformlings werden ebenfalls in der US 3,632,713, der US 3,950,459 sowie der US 3,892,830 beschrieben. Eine Temperaturkonditionierung durch selektive Abschattung wird in der DE-OS 33 14 106 angegeben.

Aus der US 5,292,243 ist es bekannt, gleichzeitig zwei Vorformlinge einer Temperaturkonditionierung in Umfangsrichtung zu unterziehen. In der EP-OS 0 620 099 findet sich eine Zusammenstellung von aus dem Stand der Technik bekannten Verfahren zur Temperaturkonditionierung von Vorformlingen. Eine schrittartige Drehbewegung der Vorformlinge bei der Temperaturkonditionierung wird in der PCT-WO 97 32 713 erläutert.

Die einzelnen vorbekannten Verfahren haben eine Reihe von Nachteilen, beispielsweise liegt ein relativ hoher apparativer Aufwand vor, es kann nur eine relativ schlechte Reproduzierbarkeit gewährleistet werden, oder gemäß der Vorrichtung aus der zuletzt genannten Druckschrift ist die Produktionsmenge je Zeiteinheit begrenzt.

Aufgabe der vorliegenden Erfindung ist es daher, ein Verfahren der einleitend genannten Art derart anzugeben, daß bei geringem Aufwand eine qualitativ hochwertige Temperaturkonditionierung bei hoher Produktionsmenge erreicht werden kann.

Diese Aufgabe wird erfindungsgemäß dadurch gelöst, daß der Vorformling von einer Trageinrichtung durch eine Temperierstrecke transportiert wird, daß die Trageinrichtung durch Eingriff einer Verzahnung zur Einleitung von Rotationsbewegungen in eine Gegenverzahnung in eine Drehbewegung versetzt wird und daß der Vorformling mindestens entlang eines Transportwegteiles vor einem Beginn des Eingriffes der Verzahnung in die Gegenverzahnung und mindestens entlang eines weiteren Transportwegteiles nach einer Beendigung des Eingriffes der Verzahnung in die Gegenverzahnung bezüglich der Rotationsrichtung unbewegt durch die Temperierstrecke bewegt wird.

Weitere Aufgabe der vorliegenden Erfindung ist es, eine Vorrichtung der einleitend genannten Art derart zu konstruieren, daß eine selektive Temperierung des Vorformlinges mit hoher Reproduzierbarkeit bei hoher Produktionsmenge ermöglicht wird.

Diese Aufgabe wird erfindungsgemäß dadurch gelöst, daß eine Trageinrichtung für die Vorformlinge ein exzentrisch relativ zu einer Längsachse der Trageinrichtung angeordnetes Steuerelement aufweist, das von einer Steuerkurve positionierbar ist und das eine Positionierung des Vorformlings in der Rotationsrichtung vorgibt und daß die Steuerkurve entlang des Transportweges des Vorformlings sowohl mindestens zwei zum Transportweg parallele Kurvensegmente als auch mindestens zwei schräg zum Transportweg verlaufende Kurvensegmente aufweist.

Die schrittweise Temperierung des Vorformlings ermöglicht es, beispielsweise entlang eines Transportweges des Vorformlinges übliche Heizstrahler nach dem Stand der Technik mit IR-Strahlern anzuordnen und unterschiedliche Bereiche des Vorformlings unterschiedlich lange der Strahlung auszusetzen. Es sind hierbei insbesondere keine aufwendigen Koordinationen zwischen der Geschwindigkeit einer Längsbewegung des Vorformlings in Transportrichtung und der Umdrehungsgeschwindigkeit erforderlich.

Die Anordnung des Vorformlings auf einer Trageinrichtung während des Heizvorganges ermöglicht es, die Kräfte zur Durchführung der Positionsveränderungen und zur Erzeugung der Transportgeschwindigkeit nur indirekt auf den Vorformling einwirken zu lassen. Der Vorformling kann relativ zur Trageinrichtung in Ruhe angeordnet werden und sämtliche Bewegungen werden durch einen Eingriff von Funktionselementen in die Trageinrichtung verursacht. Hierdurch wird eine schonende Handhabung auch eines durch die Temperierung plastifizierten Vorformlings ermöglicht. Durch die Erzeugung der Drehbewegung gemäß dem erfindungsgemäßen Verfahren durch einen Eingriff einer Verzahnung in die Gegenverzahnung wird eine sehr hohe Flexibilität bei der Vorgabe der Bewegungsabläufe erreicht. Das Durchlaufen von einander zeitlich folgenden Phasen eines Eingriffes der Verzahnung und von Translationsphasen des Vorformlings ohne Rotationsbewegung unterstützt die Erzeugung des vorgegebenen Temperaturprofils in Umfangsrichtung.

Die gemäß der erfindungsgemäßen Vorrichtung vorgesehene Steuerkurve zur Positionierung der Trageinrichtung ermöglicht die Durchführung von Positionsveränderungen des Vorformlings in Rotationsrichtung ohne aktive Stellelemente lediglich durch Abgriff der Steuerkurve bei der Durchführung der Vorwärtsbewegung des Vorformling. Die Verwendung von Steuerkurven und zugeordneten Steuerelementen an der Trageinrichtung führt zu einer exakten Reproduzierbarkeit der Rotationspositionierungen und vermeidet entlang des Transportweges zunehmende Abweichungen von den Sollpositionierungen.

Zur Unterstützung einer raumsparenden Verfahrensdurchführung wird vorgeschlagen, daß der Vorformling entlang einer gekrümmten Heizstrecke transportiert wird.

Ein einfacher Transportvorgang im Bereich der Heizeinrichtung kann dadurch realisiert werden, daß der Vorformling im Bereich der Heizeinrichtung von einem Heizrad transportiert wird.

Zur Bereitstellung einer thermischen Grundkonditionierung wird vorgeschlagen, daß der Vorformling in einem Anfangsbereich der Heizstrecke zunächst zur Aufbringung einer Grundtemperierung kontinuierlich rotiert.

Eine weitere Möglichkeit zur Durchführung eines Teiles der Drehbewegung besteht darin, daß die Trageinrichtung durch Eingriff eines Steuerelementes in eine Führungsschiene in Rotationsrichtung positioniert wird.

Eine effektive Einleitung von Positionierkräften kann dadurch erfolgen, daß durch das Steuerelement hebelartig Positionierkräfte in die Trageinrichtung eingeleitet werden.

Eine mechanische Vorgabe einer jeweiligen Rotationspositionierung wird dadurch unterstützt, daß die Trageinrichtung entlang mindestens eines Teiles des Transportweges mit einem schräg nach vorne orientierten hebelartigen Steuerelement bewegt wird.

Ebenfalls erweist es sich als vorteilhaft, daß die Trageinrichtung entlang mindestens eines Teiles des Transportweges mit einem schräg nach hinten orientierten hebelartigen Steuerelement bewegt wird.

Zur Unterstützung einer relativ zueinander gleichmäßigen Temperierung der Wandungsbereiche eines geringeren Temperaturniveaus wird vorgeschlagen, daß sowohl bei einem Eingriff der Verzahnung in die Gegenverzahnung als auch bei einem Eingriff des Steuerelementes in die Führungsschiene eine gleiche Drehrichtung der Trageinrichtung eingehalten wird.

Alternativ ist es aber auch möglich, daß die Trageinrichtung bei einem Eingriff der Verzahnung in die Gegenverzahnung entgegengesetzt wie bei einem Eingriff des Steuerelementes in die Führungsschiene gedreht wird.

Eine reibungsarme Vorgabe der Drehpositionierungen kann dadurch erfolgen, daß das Steuerelement eine Kurvenrolle aufweist.

Zur Unterstützung einer modularen Realisierung der Heizeinrichtung wird vorgeschlagen, daß die Heizeinrichtung Heizkästen aufweist, die mit Infrarotstrahlern ausgestattet sind.

Eine räumlich zweckmäßige Anordnung der einzelnen Bauelemente besteht darin, daß die Gegenverzahnung zwischen zwei Heizkästen angeordnet ist.

Zur Ermöglichung einer optimalen Ausnutzung des zur Verfügung stehenden Bauraumes wird vorgeschlagen, daß die Heizkästen relativ zum Transportweg der Vorformlinge außenseitig entlang des Heizrades angeordnet sind.

Eine vorteilhafte Realisierung der Trageinrichtung besteht darin, daß die Trageinrichtung als ein Transportdorn ausgebildet ist, der eine Halterung für die Vorformlinge aufweist.

Zur Bereitstellung einer jederzeit räumlich exakt definierten Rotationspositionierung der Vorformlinge sowie der geblasenen Flaschen wird vorgeschlagen, daß mindestens entlang eines Teiles des Transportweges der Vorformlinge außerhalb des Bereiches der Heizeinrichtung eine Steuerkurve für die Steuerelemente angeordnet ist.

Eine weitere Variante zur Handhabung der Formlinge besteht darin, daß mit Ausnahme des Transportweges entlang des Blasrades sowie des Bereiches einer gleichmäßigen Rotation der Vorformlinge entlang der Heizeinrichtung entlang der übrigen Bereiche des Transportweges der Vorformlinge durch die Vorrichtung zur Blasverformung Steuerkurven für die Steuerelemente angeordnet sind.

In der Zeichnung sind Ausführungsbeispiele der Erfindung schematisch dargestellt. Es zeigen:
- Fig. 1: eine vereinfachte Darstellung einer Vorrichtung zur Blasverformung mit Heizrad und Blasrad,
- Fig. 2: eine Darstellung einer weiteren Vorrichtung zur Blasverformung in einer weiteren stark schematisierten Ausführungsform mit schienenartigen Ausrichtelementen für die Trageinrichtung entlang von Bereichen des Transportweges ,
- Fig. 3: eine vergrößerte Darstellung eines Heizrades mit zugeordneten Heizkästen und Kühlgebläsen,
- Fig. 4: eine Darstellung einer Trageinrichtung für den Vorformling mit Steuerelement und zugeordneter Steuerkurve,
- Fig. 5: eine Darstellung der Trageinrichtung bei einem Eingriff einer Verzahnung der Trageinrichtung in eine Gegenverzahnung,
- Fig. 6: eine vereinfachte Darstellung gemäß Blickrichtung VI in Fig. 5,
- Fig. 7: eine weitere schematisierte Darstellung zur Veranschaulichung eines Eingriffes eines Steuerelementes in die Steuerkurve im Bereich einer Umlenkung
**und**
- Fig. 8: eine weitere Darstellung zur Veranschaulichung des Verlaufes der Steuerkurve entlang des Transportweges des Vorformling im Bereich der Heizeinrichtung.

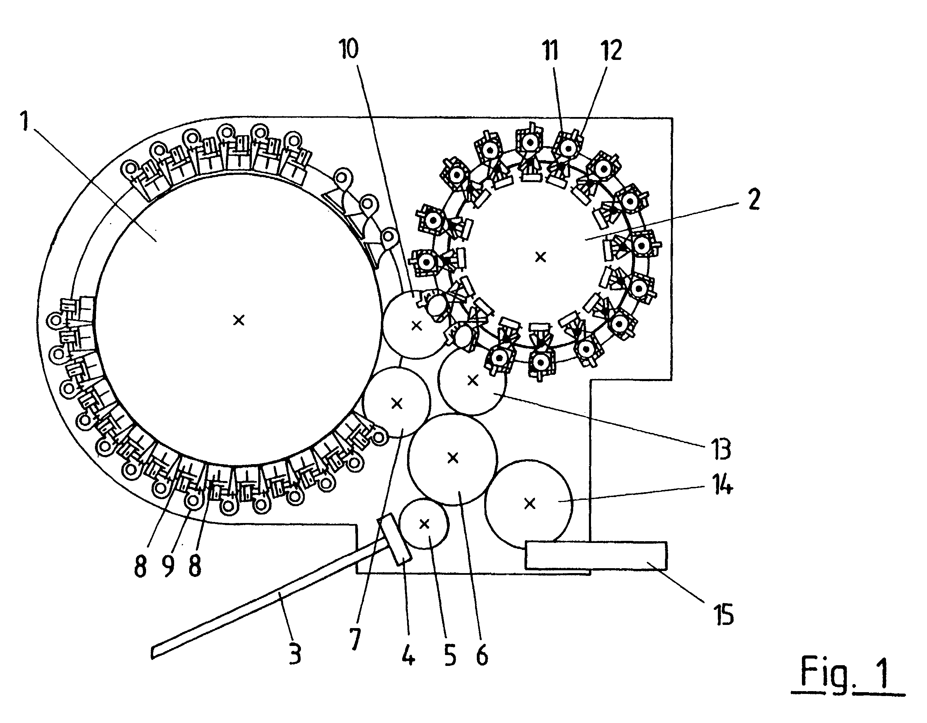

Bei der in Fig. 1 dargestellten Ausführungsform weist die Vorrichtung zur Blasformung von Behältern ein Heizrad (1) und ein Blasrad (2) auf. Zu verarbeitende Vorformlinge werden über eine Zuführschiene (3) in den Bereich einer Wendeeinrichtung (4) geleitet und von Übergaberädern (5,6,7) in den Bereich des Heirades (1) transportiert. Bei dieser Variante werden die Vorformlinge hängend mit ihren Mündungen nach oben orientiert entlang der Zuführschiene (1) geleitet und von der Wendeeinrichtung (4) um 180° gedreht. Eine Beheizung im Bereich des Heizrades (1) erfolgt hierdurch derart, daß die Vorformlinge stehend mit ihren Mündungen nach unten orientiert sind. Es ist aber ebenfalls denkbar, eine hängende Heizung ohne vorhergehende Wendung der Vorformling durchzuführen.

Entlang des Heizrades (1) sind Heizeinrichtungen (8) und Kühleinrichtungen (9) angeordnet. Die Heizeinrichtungen (8) beheizen die Vorformlinge mit Hilfe von IR-Strahlung und die Kühleinrichtungen (9) blasen zur Oberflächenkühlung Luft auf die Oberflächen der beheizten Vorformlinge.

Nach Abschluß der Beheizung und Durchlaufen einer Kühlstrecke werden die temperierten Vorformlinge von einem Übergaberad (10) zum Blasrad (2) transportiert und hier in Formen (11) eingesetzt, die von Blasstationen (12) gehaltert sind. Die Blasstationen (12) sind buchartig aufklappbar und verschließbar. Nach einem Abschluß des Blasvorganges werden fertiggeblasene Behälter aus der Blasstation (12) entnommen und von Übergaberädern (13,6,14) einer Ausgabestrecke (15) zugeführt. Bei einer Blasformung der Vorformlinge im Bereich des Blasrades (2) mit einer Mündungsorientierung nach unten ist insbesondere daran gedacht, zwischen dem Blasrad (2) und der Ausgabestrecke (15) eine weitere Wendeeinrichtung anzuordnen, so daß die geblasenen Behälter hängend im Bereich der Ausgabestrecke (15) transportiert werden können.

Der Vorformling besteht typischerweise aus einem Mündungsabschnitt, einem den Mündungsabschnitt von einem Halsbereich trennenden Stützring, einem den Halsbereich in einen Wandungsabschnitt überleitenden Schulterbereich sowie einem Boden. Der Stützring überkragt den Mündungsabschnitt quer zu einer Längsachse. In der Region des Schulterbereiches erweitert sich der Außendurchmesser des Vorformlings ausgehend vom Halsbereich.

Der Mündungsabschnitt kann beispielsweise mit einem Außengewinde versehen sein, das es ermöglicht, beim fertigen Behälter einen Schraubverschluß aufzusetzen. Es ist aber ebenfalls möglich, den Mündungsabschnitt mit einer Außenwulst zu versehen, um eine Angriffsfläche für einen Kronkorken zu schaffen. Darüber hinaus sind auch eine Vielzahl weiterer Gestaltungen denkbar, um ein Aufsetzen von Steckverschlüssen zu ermöglichen.

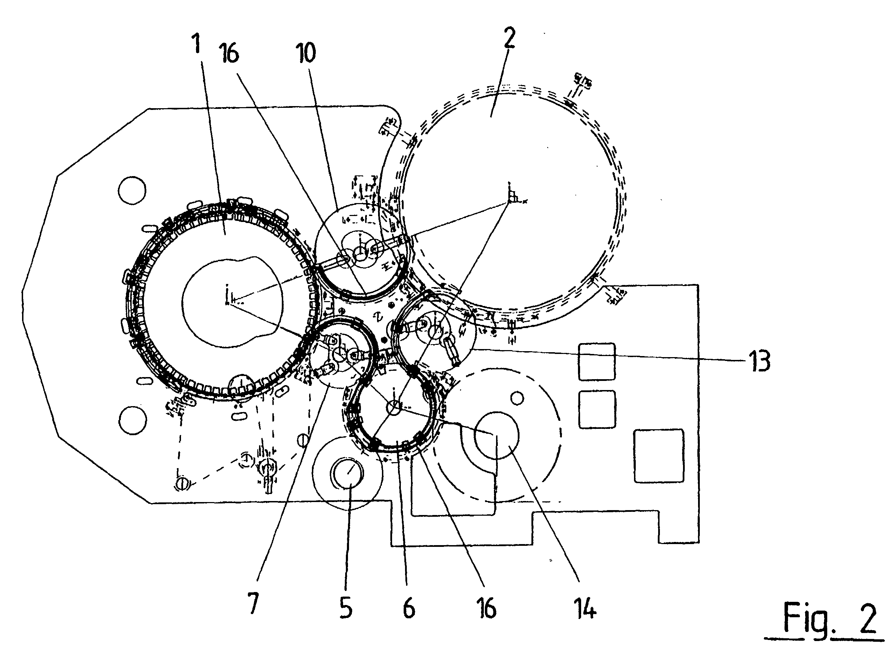

Aus der Darstellung in Fig. 2 ist erkennbar, daß entlang des Transportweges der Vorformlinge Führungsschienen (16) angeordnet sein können, die im Bereich der jeweiligen Transportpositionierungen für exakt definierte Ausrichtungen der Vorformlinge in Rotationsrichtung sorgen. Es kann hierdurch insbesondere gewährleistet werden, daß die im Bereich des Heizrades (1) mit dem Temperaturprofil in Umfangsrichtung versehenen Vorformlinge in einer exakt bekannten und vorgegebenen Orientierung an die Blasstationen (12) im Bereich des Blasrades (2) übergeben werden. Es besteht hierdurch eine exakt definierte Zuordnung der Umfangsbereiche der Vorformlinge zur Kontur der Formen (11).

Aus Fig. 2 ist ebenfalls erkennbar, daß mindestens einige der Übergaberäder (7,10,13) mit Übergabearmen ausgestattet sind, die die Vorformlinge beziehungsweise die geblasenen Flaschen positionieren.

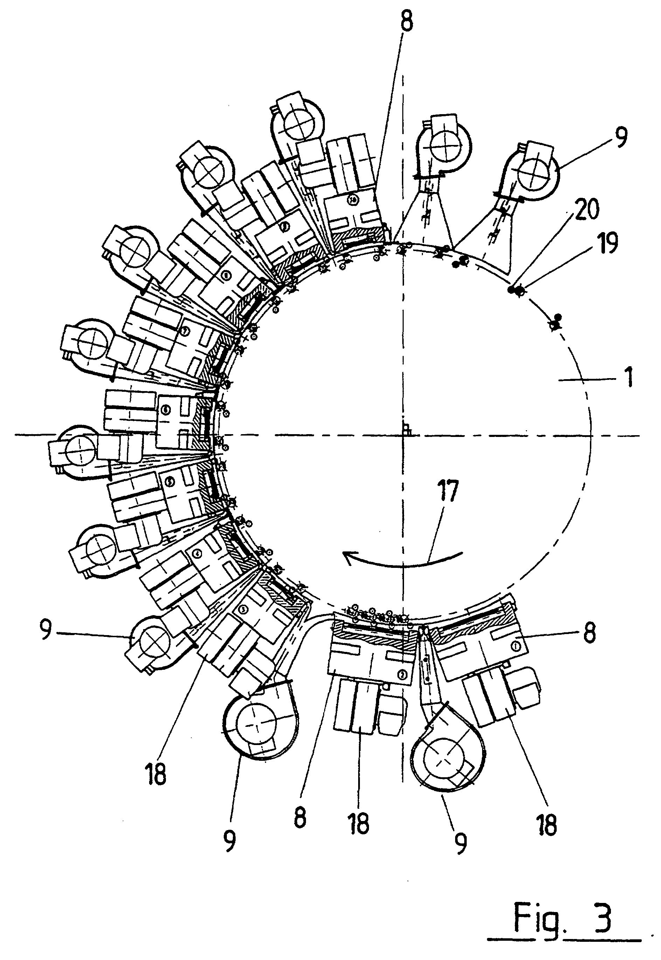

Aus der vergrößerten Darstellung des Heizrades (1) in Fig. 3 ist erkennbar, daß in Transportrichtung (17) zunächst zwei relativ breit dimensionierte Heizkästen angeordnet sind und daß die darauf folgenden Heizeinrichtungen (8) in Transportrichtung eine geringere Dimensionierung aufweisen. Ebenfalls ist erkennbar, daß jeweils zwischen zwei Heizeinrichtungen (8) als Gebläse ausgebildete Kühleinrichtungen (9) angeordnet sind. Ebenfalls sind Gebläse (9) in Transportrichtung (17) hinter den letzten Heizeinrichtungen (8) vorgesehen. Zur Verbesserung einer Lebensdauer der Heizeinrichtungen (8) sind auch die Heizeinrichtungen (8) selbst mit Gebläsen (18) ausgestattet.

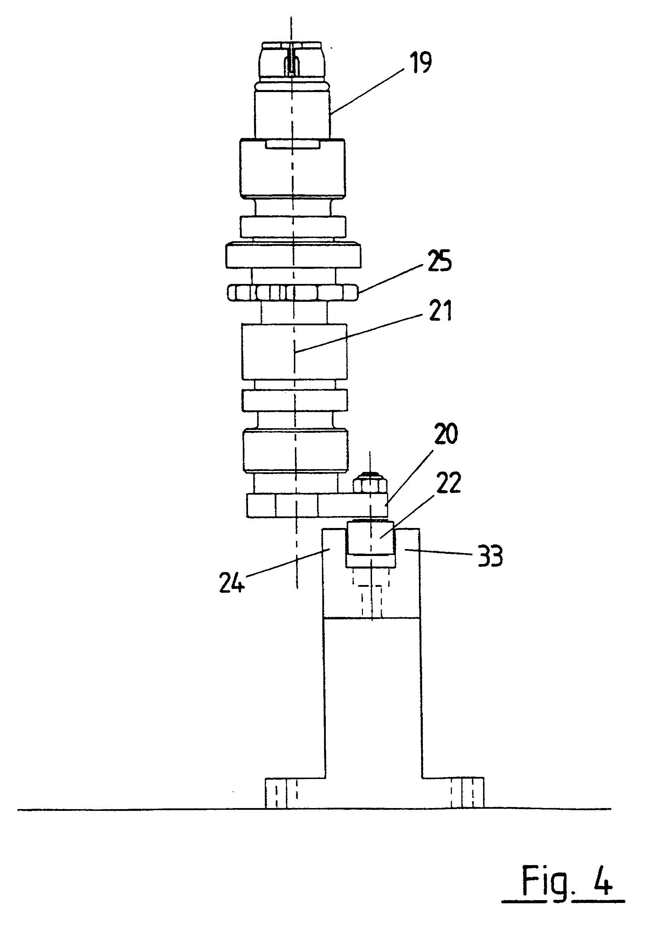

Die Darstellung in Fig. 4 veranschaulicht einen Eingriff einer Trageinrichtung (19) für die Vorformlinge beziehungsweise die geblasenen Behälter mit einem Steuerelement (20) in die Führungsschiene (16). Das Steuerelement (20) ist hierbei als eine exzentrisch zu einer Längsachse (21) der Trageinrichtung (19) angeordnete Kurvenrolle (22) ausgebildet. Als Führungsschiene (16) kann beispielsweise ein u-förmiges Profil verwendet werden, das im Bereich von Seitenschenkeln (23,24) die Kurvenrollen (22) führt.

Die Trageinrichtung (19) kann als ein Transportdorn ausgebildet sein, der durch einen Innenraum hindurch die im Bereich der Blasstation (12) zu expandierenden Vorformlinge mit Druckluft speist.

Gemäß der in Fig. 4 dargestellten Ausführungsform ist die Trageinrichtung (19) mit einer Verzahnung (25) versehen, die als ein zentrisch zur Längsachse (21) angeordnetes Zahnrad ausgeführt sein kann. Das Zahnrad ist verdrehungssicher im Bereich der Trageinrichtung (19) fixiert.

Aus der Darstellung in Fig. 3 ist die jeweilige Positionierung der Trageinrichtung (19) mit Steuerelement (20) in unterschiedlichen Orientierungen zu erkennen. Vorzugsweise ist das exzentrisch angeordnete Steuerelement (20) nach einem Abschluß einer Drehbewegung zur Positionsveränderung in Transportrichtung (17) entweder schräg nach vorne oder schräg nach hinten ausgerichtet.

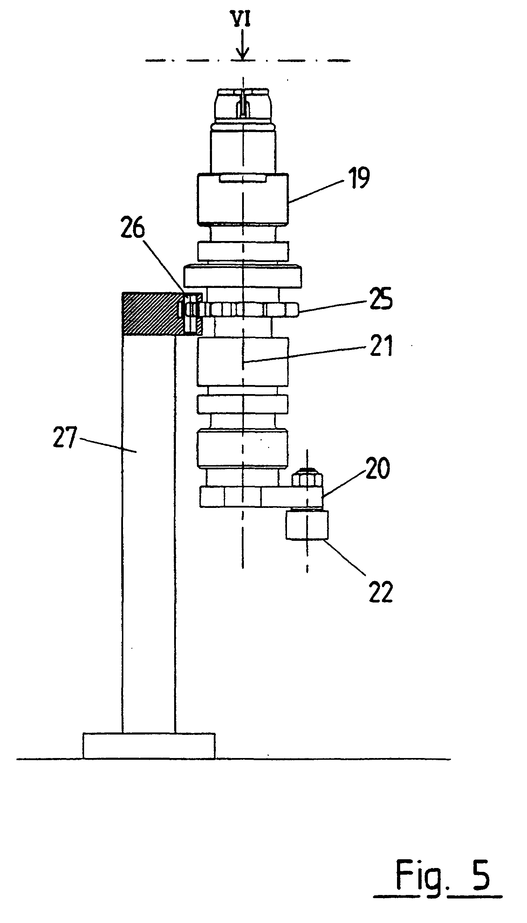

Fig. 5 zeigt die Trageinrichtung (19) in einer Transportpositionierung, in der das Steuerelement (20) von der Führungsschiene (16) freigegeben ist. In dieser Positionierung greift jedoch die Verzahung (25) in eine Gegenverzahnung (26) ein, die im Bereich eines Ständers (27) gelagert ist. In der dargestellten Ausführungsform ist die Gegenverzahnung (26) als Zahnstangensegment oder als Kettenabschnitt im Bereich des Ständers (27) fixiert. Eine Rotationsbewegung der Trageinrichtung (19) wird hierdurch lediglich durch die Translation der Trageinrichtungen (19) in Transportrichtung (17) und durch das zugehörige Abrollen der Verzahnung (25) in der Gegenverzahnung (26) verursacht.

Gemäß einer anderen Ausführungsform ist aber auch daran gedacht, die Gegenverzahnung (26) beweglich auszuführen. Durch diese bewegliche Anordnung der Gegenverzahnung (26) kann ein aktiver Antrieb der Trageinrichtung (19) in Umfangsrichtung erfolgen, um gezielt die Rotationsgeschwindigkeit gegenüber einem einfachen Abrollen zu beschleunigen oder gegebenenfalls auch zu verlangsamen.

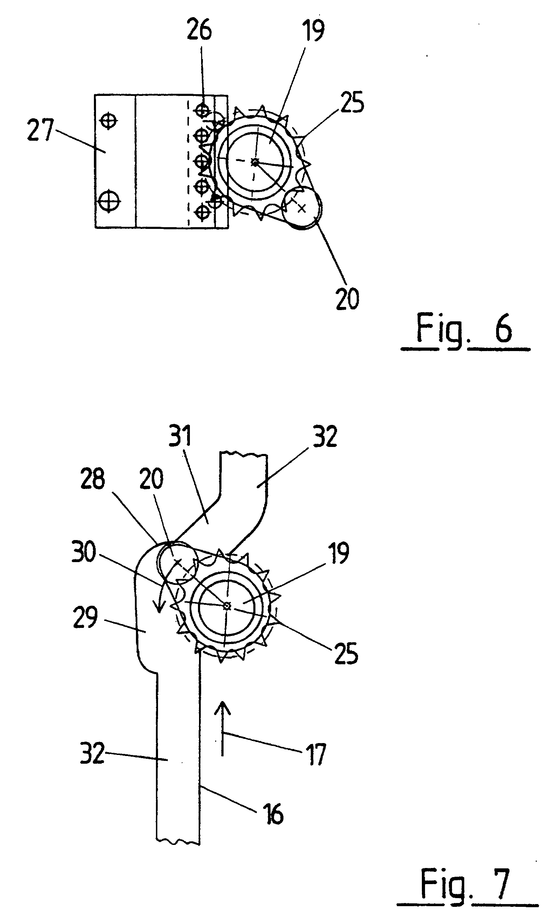

Fig. 6 zeigt eine weitere mögliche Ausführungsform der Gegenverzahnung (26). Hier sind die Elemente zum Eingriff in die Verzahnung (25) zylindersegmentartig ausgebildet und mit einem Abstand zueinander versehen, der an die Konturgebung der Verzahnung (25) angepaßt ist.

Die Detaildarstellung in Fig. 7 veranschaulicht den Eingriff des Steuerelementes (20) in die Führungsschiene (16) im Bereich einer vorgesehenen Positionsveränderung der Trageinrichtung (19) in Umfangsrichtung. Bei der dargestellten Positionierung der Trageinrichtung (19) ist das Steuerelement (20) in Transportrichtung (17) schräg nach vorne orientiert und stößt gegen eine Umlenkflanke (28) der Führungsschiene (16). Entgegen der Transportrichtung (17) ist die Umlenkflanke (28) in eine Umlenkmulde (29) übergeleitet, in deren Bereich sich eine Breite der Führungsschiene (16) relativ zur übrigen Breitenausdehnunge der Führungsschiene (16) vergrößert. Durch diese Erweiterung ist es möglich, daß das Steuerelement (20) im Anschluß an seinen Kontakt mit der Umlenkflanke (28) bei einer weiteren Translationsbewegung der Trageinrichtung (19) in Transportrichtung (17) eine Bewegung in Schwenkrichtung (30) durchführt.

Die Drehbewegung der Trageinrichtung (19) in Schwenkrichtung (30) wird zunächst solange fortgesetzt, bis eine Verbindungslinie zwischen dem Steuerlement (20) und der Längsachse (21) im wesentlichen quer zur Transportrichtung (17) ausgerichtet ist. Bei einer Weiterführung der Translationsbewegung der Trageinrichtung (19) in Transportrichtung (17) gleitet das Steuerelement (20) entlang eines Diagonalsegementes (31) der Führungsschiene (16) und führt hierdurch zu einer weiteren Drehung der Trageinrichtung (19) in Schwenkrichtung (30). Diese Drehbewegung wird solange fortgesetzt, bis das Steuerelement (20) erneut in den Bereich eines Linearsegmentes (32) gelangt, das sich im wesentlichen parallel zur Transportrichtung (17) erstreckt. Es wird dann wieder die in Fig. 6 dargestellte Positionierung der Trageinrichtung (19) eingenommen.

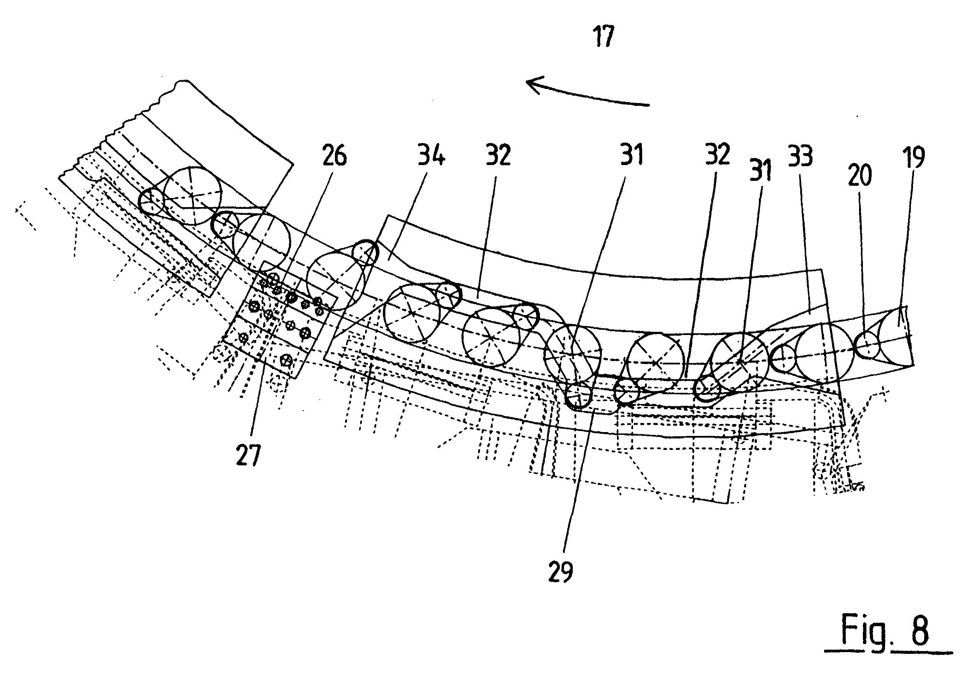

Fig. 8 veranschaulicht eine Kombination von Segmenten der Führungsschiene (16) und der Anordnung von Gegenverzahnungen (26). Gemäß der dargestellten Ausführungsform sind in Transportrichtung (17) hintereinander abwechselnd Segmente von Führungsschienen (16) mit Umlenkmulden (29) und zwischen diesen Segmenten jeweils Gegenverzahnungen (26) angeordnet. In einer Orientierung entgegen der Transporrichtung (17) beginnt ein Segment der Führungsschiene (16) jeweils mit einem Einlaufbereich (33), der sich trichterartig in Richtung auf ein erstes Diagonalsegment (31) verjüngt. Durch die trichterförmige Verjüngung des Einlaufbereiches (33) werden gegebenenfalls vorliegende Abweichungen einer Orientierung einer Verbindungslinie der Mittelpunkte von Steuerelement (20) und Trageinrichtung (19) ausgeglichen. Durch das Diagonalsegment (31) wird das Steuerelement (20) in Transportrichtung (17) schräg nach vorne orientiert.

Im Bereich der Umlenkmulde (29) erfolgt eine Umorientierung und eine Überführung in die Ausgangsposition findet nach Verlassen des Segmentes (16) im Bereich der Gegenverzahnung (26) statt. Grundsätzlich ist es im Bereich der Gegenverzahnung (26) sowohl möglich, für eine Fortsetzung der durch den Verlauf der Führungsschiene (16) definierten Drehrichtung der Trageinrichtung (19) zu sorgen, es ist aber ebenfalls möglich, eine Drehrichtung vorzugeben, die der ursprünglichen Drehrichtung entgegengesetzt ist und hierdurch ein Rückdrehen in die Ausgangspositionierung zu verursachen. Grundsätzlich wird aber im Hinblick auf eine möglichst hohe Gleichmäßigkeit und Reproduzierbarkeit der Beheizung eine kontinuierliche Beibehaltung der Drehorientierung bevorzugt.

Gemäß der in Fig. 8 dargestellten Ausführungsform weist das Segment der Führungsschiene (16) ebenfalls einen sich in Transportrichtung (17) erweiternden Auskopplungsbereich (34) auf. Durch diese Erweiterung im Auskopplungsbereich (34) ist es möglich, eine räumlich enge Anordnung der Segmente der Führungsschiene (16) sowie der Gegenverzahung (26) vorzusehen und trotz einer räumlichen Überschneidung des Steuerelementes (20) mit dem Auskopplungsbereich (34) bereits eine Drehbewegung der Trageinrichtung (19) zu verursachen.

Zur weiteren Verbesserung der grundsätzlich bereits beschriebenen technischen Effekte sind unterschiedliche Variationen denkbar. Beispielsweise ist es möglich, zur sicheren Fixierung des Vorformlings im Bereich der Trageinrichtung (19) einen im Bereich der Trageinrichtung (19) angeordneten Klemmring vorzusehen. Für die Durchführung der erforderlichen Bewegungsabläufe ist es ebenfalls vorteilhaft, bei der in Fig. 3 dargestellten Anordnung bei den in Transportrichtung (17) beiden ersten Heizeinrichtungen (8) nicht lediglich ein Abwälzen der Trageinrichtungen (19) mit ihren Verzahnungen (25) an einer ortsfesten Gegenverzahnung vorzusehen, sondern hier beispielsweise als Gegenverzahnung eine angetriebene Kette vorzusehen. Gegenüber einem einfachen Abwälzen an einer ortsfesten Gegenverzahnung kann hierdurch die Rotationsgeschwindigkeit beispielsweise verdoppelt werden.

Alternativ zu einer permanenten Kontrolle der Rotationspositionierung der Trageinrichtung (19) außerhalb des Bereiches des Heizrades durch einen Eingriff der Steuerelemente (20) in die Führungsschiene (16) ist es auch möglich, zumindest bereichsweise die Rotationsorientierung nicht vorzugeben und erst vor einer Übergabe an die Blasstation (12) beziehungsweise vor einem Transport der Trageinrichtungen (19) entlang der Heizeinrichtungen (8) durch geeignete Ausrichtelemente eine definierte Vorgabe der Rotationsorientierung der Trageinrichtungen (19) herzustellen.

Zur Realisierung des Temperaturprofils in Richtung des Umfanges des Vorformlinges ist es beispielsweise möglich, eine Rotation des Vorformlings (1) um die Längsachse (8) mit einer schrittweisen Bewegung derartig durchzuführen, daß jeweils kurze Bewegungsabschnitte und Ruheabschnitte aufeinander folgen. Bei einer Temperaturprofilierung in Umfangsrichtung mit vier Winkelbereichen kann die Bewegung derart erfolgen, daß zunächst innerhalb eines vorgebbaren Ruheabschnittes ein vorgebbarer Winkelbereich des Vorformlings der Heizeinrichtung (8) zugewandt ist und daß nach dem Ende des Ruheabschnittes innerhalb des Bewegungsabschnittes ein folgender Winkelbereich relativ schnell an der Heizeinrichtung (8) vorbeigeführt wird. Zum Ende des zweiten Bewegungsabschnittes ist dann der zweite Winkelbereich der Heizeinrichtung (8) zugewandt. Der Vorformling wird somit um etwa 180° gedreht. Die zeitliche Dauer der Bewegungsabschnitte wird in der Regel wesentlich kürzer als die zeitliche Dauer der Ruheabschnitte vorgegeben.

Beispielsweise ist es auch möglich, den Vorformling zunächst vorab gleichmäßig zu temperieren und anschließend mit Hilfe der beschriebenen Bewegung das Temperaturprofil zu erzeugen. Ebenfalls ist es möglich, einen Bewegungsablauf des Vorformlinges bei der Rotation derart vorzusehen, daß ausgehend von einem kalten Vorformling durch die jeweiligen Bewegungsphasen das Temperaturprofil erreicht wird. Zumindest bei einer sich an eine Vortemperierung anschließenden Temperaturprofilierung sind die Bewegungsabschnitte zeitlich wesentlich kürzer als die Ruheabschnitte. Das Verhältnis der Zeitdauern kann beispielsweise 1:10 sein.

Die beschriebenen Maßnahmen zur Erzeugung eines Temperaturprofils im Bereich des Vorformlings sowohl in Richtung seiner Längsachse als auch in Umfangsrichtung lassen sich beliebig miteinander kombinieren, so daß eine Anpassung an die jeweils konkret vorliegenden Vorformlingsgeometrien erfolgen kann.

Grundsätzlich können beliebige thermoplastische Kunststoffe gemäß dem beschriebenen Verfahren und mit Hilfe der beschriebenen Vorrichtung verarbeitet werden. Insbesondere ist es beispielsweise möglich, Vorformlinge aus Polypropylen oder aus Polyethylenterephthalat zu verarbeiten.

Im Hinblick auf die diversen beschriebenen Möglichkeiten zur Temperierung des Vorformlings, bei denen der Vorformling zunächst im zu temperierenden Bereich im wesentlichen gleichmäßig temperiert und anschließend mit einer überlagerten Temperaturprofilierung versehen wird, ist ergänzend zu vermerken, daß auch dieses Temperierungsverfahren sowohl in Umfangsrichtung des Vorformlings als auch in Längsrichtung des Vorformlings oder kombiniert in beiden räumlichen Orientierungen angewendet werden kann. Die Wärmeprofilierung in Längsrichtung wird darüber hinaus insbesondere so gewählt, daß eine hohe und gleichmäßige Orientierung des Materials erreicht wird, um sowohl eine gute Widerstandsfähigkeit des geblasenen Behälters als auch einen geringen Materialeinsatz gewährleisten zu können.

Alternativ zu einer Verwendung eines Heizrades im Bereich der Heizeinrichtung (8) ist es beispielsweise auch möglich, einen Transport der Vorformlinge mit Hilfe einer Antriebskette durchzuführen. Die entsprechenden Elemente zur Positionierung der Trageinrichtungen (19) sind in diesem Fall entlang der Transportkette angeordnet. Die Transportkette kann beispielsweise entlang einer rechteckförmigen Grundstruktur geführt und in Eckbereichen dieser Grundstruktur über Rollen oder Zahnräder umgelenkt sein. Eine Anordnung der Heizeinrichtungen (8) erfolgt bei der Verwendung einer Transportkette vorzugsweise entlang von linear verlaufenden Bereichen der Transportkette. Grundsätzlich ist es aber auch möglich, die Transportkette entlang einer gekrümmten Bahn zu bewegen.

## Patentansprüche

1. Verfahren zur Temperierung von Vorformlingen aus einem thermoplastischen Material, wobei die Vorformlinge zur Blasformung im Behälter vorgesehen sind, bei dem der Vorformling entlang eines Umfanges mit einem Temperaturprofil versehen wird, das dadurch erzeugt wird, daß sich in Richtung einer Längsachse des Vorformlings erstreckende streifenförmige Bereiche unterschiedlich beheizt werden und bei dem eine schrittweise Temperierung zur zeitlich aufeinander folgenden thermischen Konditionierung unterschiedlicher Bereiche des Vorformlings durchgeführt wird sowie bei dem eine schrittweise Rotation mit Bewegungs- und Ruhephase durchgeführt wird, **dadurch gekennzeichnet, daß** der Vorformling von einer Trageinrichtung (19) durch eine Temperierstrecke transportiert wird, daß die Trageinrichtung (19) durch Eingriff einer Verzahnung (25) zur Einleitung von Rotationsbewegungen in eine Gegenverzahnung (26) in eine Drehbewegung versetzt wird und daß der Vorformling mindestens entlang eines Transportwegteiles vor einem Beginn des Eingriffes der Verzahnung (25) in die Gegenverzahnung (26) und mindestens entlang eines weiteren Transportwegteiles nach einer Beendigung des Eingriffes der Verzahnung (25) in die Gegenverzahnung (26) bezüglich der Rotationsrichtung unbewegt durch die Temperierstrecke bewegt wird.

2. Verfahren nach Anspruch 1, **dadurch gekennzeichnet, daß** der Vorformling entlang einer gekrümmten Heizstrecke transportiert wird.

3. Verfahren nach Anspruch 1 oder 2, **dadurch gekennzeichnet, daß** der Vorformling im Bereich der Heizeinrichtung (8) von einem Heizrad (1) transportiert wird.

4. Verfahren nach einem der Ansprüche 1 bis 3, **dadurch gekennzeichnet, daß** der Vorformling in einem Anfangsbereich der Heizstrecke zunächst zur Aufbringung einer Grundtemperierung kontinuierlich rotiert.

5. Verfahren nach einem der Ansprüche 1 bis 4, **dadurch gekennzeichnet, daß** die Trageinrichtung (19) durch Eingriff eines Steuerelementes (20) in eine Führungsschiene (16) in Rotationsrichtung positioniert wird.

6. Verfahren nach einem der Ansprüche 1 bis 5, **dadurch gekennzeichnet, daß** durch das Steuerelement (20) hebelartig Positionierkräfte in die Trageinrichtung (19) eingeleitet werden.

7. Verfahren nach einem der Ansprüche 1 bis 6, **dadurch gekennzeichnet, daß** die Trageinrichtung (19) entlang mindestens eines Teiles des Transportweges mit einem schräg nach vorne orientierten hebelartigen Steuerelement (20) bewegt wird.

8. Verfahren nach einem der Ansprüche 1 bis 7, **dadurch gekennzeichnet, daß** die Trageinrichtung (19) entlang mindestens eines Teiles des Transportweges mit einem schräg nach hinten orientierten hebelartigen Steuerelement (20) bewegt wird.

9. Verfahren nach einem der Ansprüche 1 bis 8, **dadurch gekennzeichnet, daß** sowohl bei einem Eingriff der Verzahnung (25) in die Gegenverzahnung (26) als auch bei einem Eingriff des Steuerelementes (20) in die Führungsschiene (16) eine gleiche Drehrichtung der Trageinrichtung (19) eingehalten wird.

10. Verfahren nach einem der Ansprüche 1 bis 8, **dadurch gekennzeichnet, daß** die Trageinrichtung (19) bei einem Eingriff der Verzahnung (25) in die Gegenverzahnung (26) entgegengesetzt wie bei einem Eingriff des Steuerelementes (20) in die Führungsschiene (16) gedreht wird.

11. Vorrichtung zur Temperierung von Vorformlingen aus einem thermoplastischen Material, die mindestens eine Förderstrecke für die Vorformlinge und mindestens eine Heizeinrichtung aufweist und die die Vorformlinge mit einem Temperaturprofil in Umfangsrichtung der Vorformlinge versieht sowie bei der zur Durchführung einer Rotationsbewegung des Vorformlings mindestens ein Rotationsantrieb vorgesehen ist, der eine schrittartige Drehbewegung des Vorformlings erzeugt, **dadurch gekennzeichnet, daß** eine Trageinrichtung (19) für die Vorformlinge ein exzentrisch relativ zu einer Längsachse (21) der Trageinrichtung (19) angeordnetes Steuerelement (20) aufweist, das von einer Steuerkurve positionierbar ist und das eine Positionierung des Vorformlings in der Rotationsrichtung vorgibt und daß die Steuerkurve entlang des Transportweges des Vorformlings sowohl mindestens zwei zum Transportweg parallele Kurvensegmente als auch mindestens zwei schräg zum Transportweg verlaufende Kurvensegmente aufweist.

12. Vorrichtung nach Anspruch 11, **dadurch gekennzeichnet, daß** das Steuerelement (20) eine Kurvenrolle (22) aufweist.

13. Vorrichtung nach Anspruch 11 oder 12, **dadurch gekennzeichnet, daß** die Heizeinrichtung (8) Heizkästen aufweist, die mit Infrarotstrahlern ausgestattet sind.

14. Vorrichtung nach Anspruch 11 bis 13, **dadurch gekennzeichnet, daß** die Trageinrichtung (19) eine Verzahnung (25) aufweist.

15. Vorrichtung nach Anspruch 11 bis 14, **dadurch gekennzeichnet, daß** im Bereich der Heizeinrichtung (8) eine korrespondierend zur Verzahnung (25) ausgebildete Gegenverzahnung (26) angeordnet ist.

16. Vorrichtung nach Anspruch 11 bis 15, **dadurch gekennzeichnet, daß** die Gegenverzahnung (26) zwischen zwei Heizkästen angeordnet ist.

17. Vorrichtung nach einem der Ansprüche 11 bis 16, **dadurch gekennzeichnet, daß** die Heizeinrichtung (8) ein Heizrad (1) zum Transport der Vorformlinge aufweist.

18. Vorrichtung nach einem der Ansprüche 11 bis 17, **dadurch gekennzeichnet, daß** die Heizkästen relativ zum Transportweg der Vorformlinge außenseitig entlang des Heizrades (1) angeordnet sind.

19. Vorrichtung nach einem der Ansprüche 11 bis 18, **dadurch gekennzeichnet, daß** die Trageinrichtung (19) als ein Transportdorn ausgebildet ist, der eine Halterung für die Vorformlinge aufweist.

20. Vorrichtung nach einem der Ansprüche 11 bis 19, **dadurch gekennzeichnet, daß** mindestens entlang eines Teiles des Transportweges der Vorformlinge außerhalb des Bereiches der Heizeinrichtung (8) eine Steuerkurve für die Steuerelemente (20) angeordnet ist.

21. Vorrichtung nach Anspruch 20, **dadurch gekennzeichnet, daß** mit Ausnahme des Transportweges entlang des Blasrades (2) sowie des Bereiches einer gleichmäßigen Rotation der Vorformlinge entlang der Heizeinrichtung (8) entlang der übrigen Bereiche des Transportweges der Vorformlinge durch die Vorrichtung zur Blasverformung Steuerkurven für die Steuerelemente (20) angeordnet sind.

22. Vorrichtung nach einem der Ansprüche 11 bis 22, **dadurch gekennzeichnet, daß** im Bereich der Heizeinrichtung (8) eine Transportkette zur Bewegung der Trageinrichtungen (19) verwendet ist.

23. Vorrichtung nach Anspruch 22, **dadurch gekennzeichnet, daß** sich die Transportkette mindestens bereichsweise linear erstreckt.

24. Vorrichtung nach Anspruch 22 oder 23, **dadurch gekennzeichnet, daß** die Transportkette eine im wesentlichen rechteckförmige Grundstruktur aufspannt.

## Claims

1. Method for the heat treatment of preforms made of a thermoplastic material, intended for blow moulding into containers, in which the preform is provided, along a periphery, with a temperature profile which is produced by strip-shaped regions extending in the direction of a longitudinal axis of the preform being heated differently and in which a stepwise heat treatment is carried out for the successive thermal conditioning of different regions of the preform and also in which a stepwise rotation with movement and rest phases is carried out, **characterised in that** the preform is conveyed by a carrying device (19) through a heat-treatment section, **in that** the carrying device (19) is set in rotation by engagement of toothing (25), for initiating rotational movements, in counter-toothing (26) and **in that** the preform is moved through the heat-treatment section, stationarily with respect to the direction of rotation, at least along a part of the conveying path before commencement of the engagement of the toothing (25) in the counter-toothing (26) and at least along a further part of the conveying path after completion of the engagement of the toothing (25) in the counter-toothing (26).

2. Method according to Claim 1, **characterised in that** the preform is conveyed along a curved heating section.

3. Method according to Claim 1 or 2, **characterised in that** the preform is conveyed in the region of the heating device (8) by a heating wheel (1).

4. Method according to one of Claims 1 to 3, **characterised in that** the preform rotates continuously in a starting region of the heating section to initially apply a basic heat treatment.

5. Method according to one of Claims 1 to 4, **characterised in that** the carrying device (19) is positioned in the direction of rotation by engagement of a control element (20) in a guide rail (16).

6. Method according to one of Claims 1 to 5, **characterised in that** positioning forces are introduced into the carrying device (19) in a lever-like manner by the control element (20).

7. Method according to one of Claims 1 to 6, **characterised in that** the carrying device (19) is moved along at least a part of the conveying path with a lever-like control element (20) oriented obliquely forwards.

8. Method according to one of Claims 1 to 7, **characterised in that** the carrying device (19) is moved along at least a part of the conveying path with a lever-like control element (20) oriented obliquely backwards.

9. Method according to one of Claims 1 to 8, **characterised in that** an identical direction of rotation of the carrying device (19) is maintained both in the case of an engagement of the toothing (25) in the counter-toothing (26) and in the case of an engagement of the control element (20) in the guide rail (16).

10. Method according to one of Claims 1 to 8, **characterised in that** the carrying device (19) is rotated in an opposite direction in the case of an engagement of the toothing (25) in the counter-toothing (26) to that in the case of an engagement of the control element (20) in the guide rail (16).

11. Apparatus for the heat treatment of preforms made of a thermoplastic material, which has at least one conveying section for the preforms and at least one heating device and which provides the preforms with a temperature profile in the peripheral direction of the preforms and also in which, to perform a rotational movement of the preform, at least one rotational drive which produces a stepwise rotation of the preform is provided, **characterised in that** a carrying device (19) for the preforms has a control element (20) which is arranged eccentrically relative to a longitudinal axis (21) of the carrying device (19) and can be positioned by a control cam and which presets a positioning of the preform in the direction of rotation and **in that** the control cam has, along the conveying path of the preform, both at least two cam segments parallel to the conveying path and at least two cam segments running obliquely to the conveying path.

12. Apparatus according to Claim 11, **characterised in that** the control element (20) has a cam roller (22).

13. Apparatus according to Claim 11 or 12, **characterised in that** the heating device (8) has heating boxes equipped with infrared radiators.

14. Apparatus according to Claim 11 to 13, **characterised in that** the carrying device (19) has toothing (25).

15. Apparatus according to Claim 11 to 14, **characterised in that** counter-toothing (26) designed in a manner corresponding to the toothing (25) is arranged in the region of the heating device (8).

16. Apparatus according to Claim 11 to 15, **characterised in that** the counter-toothing (26) is arranged between two heating boxes.

17. Apparatus according to one of Claims 11 to 16, **characterised in that** the heating device (8) has a heating wheel (1) for conveying the preforms.

18. Apparatus according to one of Claims 11 to 17, **characterised in that** the heating boxes are arranged on the outside along the heating wheel (1) relative to the conveying path of the preforms.

19. Apparatus according to one of Claims 11 to 18, **characterised in that** the carrying device (19) is designed as a conveying mandrel, which has a holder for the preforms.

20. Apparatus according to one of Claims 11 to 19, **characterised in that** a control cam for the control elements (20) is arranged, at least along a part of the conveying path of the preforms, outside the region of the heating device (8).

21. Apparatus according to Claim 20, **characterised in that**, with the exception of the conveying path along the blowing wheel (2) and also the region of uniform rotation of the preforms along the heating device (8), control cams for the control elements (20) are arranged along the remaining regions of the conveying path of the preforms through the apparatus for blow moulding.

22. Apparatus according to one of Claims 11 to 21, **characterised in that** a conveying chain for moving the carrying devices (19) is used in the region of the heating device (8).

23. Apparatus according to Claim 22, **characterised in that** the conveying chain extends linearly at least in certain regions.

24. Apparatus according to Claim 22 or 23, **characterised in that** the conveying chain defines a substantially rectangular basic structure.

## Revendications

1. Procédé de thermorégulation de préformés constitués d'un matériau thermoplastique, où les préformés sont prévus pour un récipient pour le moulage par soufflage et au cours duquel le préformé présente un profil de température le long d'une circonférence, qui est produit en ce que dans la direction d'un axe longitudinal du préformé, des zones en forme de bande sont différemment chauffées et au cours duquel une thermorégulation par étape est réalisée pour un conditionnement thermique successif des différentes zones du préformé (1), ainsi qu'au cours duquel une rotation par étape est réalisée avec des phases de mouvement et de repos, **caractérisé en ce** le préformé est transporté par un dispositif support (19) au travers d'un trajet de thermorégulation, en ce que le dispositif support (19) est déplacé par prise d'un engrenage (25), pour la mise en oeuvre des mouvements de rotation, dans un engrenage complémentaire (26) dans une rotation et que le préformé est déplacé au moins le long d'une partie d'une voie de transport, avant le début de la prise de l'engrenage (25) dans l'engrenage complémentaire (26) et au moins le long d'une autre partie de la voie de transport, après l'achèvement de la prise de l'engrenage (25) dans l'engrenage complémentaire (26), de manière immobile par rapport à la direction de rotation, dans le trajet de thermorégulation.

2. Procédé suivant la revendication 1, **caractérisé en ce que** le préformé est transporté le long d'un trajet chauffant incurvé.

3. Procédé suivant la revendication 1 ou 2, **caractérisé en ce que** le préformé est transporté dans la zone de l'installation de chauffage (8), depuis une roue chauffante (1).

4. Procédé suivant l'une quelconque des revendications 1 à 3, **caractérisé en ce que** le préformé est mis en rotation de manière continue dans une zone initiale du trajet chauffant, d'abord pour appliquer une thermorégulation de base.

5. Procédé suivant l'une quelconque des revendications 1 à 4, **caractérisé en ce que** le dispositif support (19) est positionné dans la direction de la rotation, par la prise d'un élément de réglage (20) dans un rail de conduite (16).

6. Procédé suivant l'une quelconque des revendications 1 à 5, **caractérisé en ce que** par l'élément de réglage (20), des forces de positionnement de type levier sont provoquées sur le dispositif support (19).

7. Procédé suivant l'une quelconque des revendications 1 à 6, **caractérisé en ce que** le dispositif support (19) est déplacé le long d'au moins une partie de la voie de transport avec un élément de réglage (20) de type levier, incliné vers l'avant.

8. Procédé suivant l'une quelconque des revendications 1 à 7, **caractérisé en ce que** le dispositif support (19) est déplacé le long d'au moins une partie de la voie de transport avec un élément de réglage (20) de type levier, incliné vers l'arrière.

9. Procédé suivant l'une quelconque des revendications 1 à 8, **caractérisé en ce que** non seulement lors de la prise de l'engrenage (25) dans l'engrenage complémentaire (26), mais également lors de la prise de l'élément de réglage (20) dans le rail de conduite (16), on maintient une rotation similaire du dispositif support (19).

10. Procédé suivant l'une quelconque des revendications 1 à 8, **caractérisé en ce que** le dispositif support (19) est mis en rotation lors de la prise de l'engrenage (25) dans l'engrenage complémentaire (26), de manière opposée à la prise de l'élément de réglage (20) dans le rail de conduite (16).

11. Dispositif de thermorégulation de préformés constitués d'un matériau thermoplastique, qui présente au moins une voie de desserte pour les préformés et au moins une installation de chauffage et qui procure au préformé, un profil de température dans le sens de la circonférence du préformé, ainsi que pour réaliser un mouvement de rotation du préformé, on prévoit au moins un dispositif de rotation qui est muni d'un mode de fonctionnement par étape, **caractérisé en ce qu'**un dispositif support (19) pour le préformé présente un élément de réglage (20) disposé de manière excentrique par rapport à un axe longitudinal (21) du dispositif support (19), lequel peut être positionné sur un guide de réglage et lequel impose un positionnement du préformé dans la direction de rotation et **en ce que** le guide de réglage présente le long de la voie de transport du préformé, non seulement au moins deux segments de guide parallèles à la voie de transport, mais également au moins deux segments de guides inclinés par rapport à la voie de transport.

12. Dispositif suivant la revendication 11, **caractérisé en ce que** l'élément de réglage (20) présente un rouleau de guide (22).

13. Dispositif suivant la revendication 11 ou 12, **caractérisé en ce que** l'installation de chauffage (8) présente une chaufferie équipée d'un appareil à infrarouge.

14. Dispositif suivant les revendications 11 à 13, **caractérisé en ce que** le dispositif support (19) présente un engrenage (25).

15. Dispositif suivant les revendications 11 à 14, **caractérisé en ce que** dans la zone de l'installation de chauffage (8), est disposé un engrenage complémentaire (26) correspondant à l'engrenage (25).

16. Dispositif suivant les revendications 11 à 15, **caractérisé en ce que** le engrenage complémentaire (26) est disposé entre deux chaufferies.

17. Dispositif suivant l'une quelconque des revendications 11 à 16, **caractérisé en ce que** l'installation de chauffage (8) présente une roue chauffante (1) pour le transport du préformé.

18. Dispositif suivant l'une quelconque des revendications 11 à 17, **caractérisé en ce que** la chaufferie est disposée le long de la roue chauffante (1), du côté externe par rapport à la voie de transport du préformé.

19. Dispositif suivant l'une quelconque des revendications 11 à 18, **caractérisé en ce que** le dispositif support (19) est formé comme une broche de transport, qui présente un support pour le préformé.

20. Dispositif suivant l'une quelconque des revendications 11 à 19, **caractérisé en ce que**, au moins le long d'une partie de la voie de transport du préformé, à l'extérieur de la zone de l'installation de chauffage (8), est disposée un guide de réglage pour l'élément de réglage (20).

21. Dispositif suivant la revendication 20, **caractérisé en ce que** à l'exception de la voie de transport le long du rail de soufflage (2), ainsi que de la zone de rotation similaire du préformé le long de l'installation de chauffage (8), le long de la zone restante de la voie de transport du préformé, par l'installation pour le moulage par soufflage, sont disposées des guides de réglage pour l'élément de réglage (20).

22. Dispositif suivant l'une quelconque des revendications 11 à 21, **caractérisé en ce que** dans la zone de l'installation de chauffage (8), une chaine de transport est utilisée pour déplacer le dispositif support (19).

23. Dispositif suivant la revendication 22, **caractérisé en ce que** la chaine de transport s'étend de manière linéaire au moins sur certaines zones.

24. Dispositif suivant la revendication 22 ou 23, **caractérisé en ce que** la chaine de transport tend une structure de base essentiellement perpendiculaire.
